# EUROPÄISCHE PATENTSCHRIFT

(11) **EP 2 013 299 B1**
(45) Veröffentlichungstag und Bekanntmachung des Hinweises auf die Patenterteilung: **23.12.2009**
(21) Anmeldenummer: 07722964.9
(22) Anmeldetag: 28.02.2007
(51) Int. Cl.: C09D 11/00

(54) **WASSERBASIERENDE PIGMENTPRÄPARATION**
WATER-BASED PIGMENT PREPARATION
PRÉPARATION PIGMENTAIRE À BASE AQUEUSE

(30) Priorität: 27.04.2006 DE 102006019553
(43) Veröffentlichungstag der Anmeldung: 14.01.2009
(73) Patentinhaber: Clariant Finance (BVI) Limited, Road Town, Tortola (VG)
(72) Erfinder: FECHNER, Björn, 65817 Eppstein (DE); BECHTOLD, Uwe, 60437 Frankfurt am Main (DE); BÖHMER, Andrea, 65830 Kriftel (DE)
(74) Vertreter: Hütter, Klaus
(86) Internationale Anmeldenummer: PCT/EP2007/001711
(87) Internationale Veröffentlichungsnummer: WO 2007/124803

(56) Entgegenhaltungen:
- EP-A- 0 801 120
- EP-A- 1 650 272
- US-A- 6 143 807
- US-A1- 2005 182 154
- US-A1- 2006 014 856
- US-B1- 6 332 943

## Beschreibung

Gegenstand der vorliegenden Erfindung sind wasserbasierende Pigmentpräparationen bzw. -dispersionen, Verfahren zu ihrer Herstellung, ihre Verwendung zum Einfärben von natürlichen und synthetischen Materialien, insbesondere von wässrigen Anstrichmitteln, Dispersions- und Lackfarben aller Art.

Bekannt und im Markt käuflich sind eine Vielzahl von Pigmentpräparationen zum Einfärben von wässrigen Anstrichmitteln, Dispersions- und Lackfarben. Beispiele dafür sind in der EP-A-0 735 109, WO 03/006 556 oder EP-A-1 049 745 (US 6,478,866 B1) enthalten. Gewöhnlicherweise kommen anionische, kationische, amphotere oder nichtionische Dispergiermittel mit Tensidcharakter, gegebenenfalls auch in makromolekularer Form, zum Einsatz, um die Pigmentteilchen feinteilig in einem wässrigen Medium physikalisch zu stabilisieren. Weiterhin enthalten herkömmliche Pigmentpräparationen neben den Tensiden oder Dispergiermitteln in der Regel auch verschiedene Additive wie Netzmittel, Verdicker, Konservierungsmittel, Viskositätsstabilisatoren, Füllstoffe und Retentionsmittel. Die Retentionsmittel, oft auch Eintrocknungsverhinderer genannt, sorgen dafür, dass das Produkt nicht eintrocknet oder bereits vor der Verwendung antrocknet. Zu diesem Zweck werden häufig niedermolekulare, hygroskopische Verbindungen wie Glykole verwendet, die jedoch den Nachteil mit sich bringen, aus dem Applikationsmedium auszudampfen. Daher gelten sie als VOC (volatile organic compounds) und werden vom Gesetzgeber zunehmend reglementiert. VOC-freie Pigmentpräparationen enthalten gemäß WO 03/006 556 und EP-A-0 585 571 hochmolekulare, nichtflüchtige Oligomere oder Polymere wie beispielsweise Polyetherpolyole (Polyglykole).

Hygroskopische nichtflüchtige Oligomere und Polymere verbleiben jedoch langfristig im Applikationsmedium. Das Verbleiben dieser Substanzen bringt einige Nachteile mit sich. Wenn beispielsweise eine wässrige Dispersionsfarbe mit einer Pigmentpräparation eingefärbt wird, die solche hygroskopischen nichtflüchtigen Verbindungen enthält, so bekommt der Farbanstrich einen leicht hygroskopischen, klebrigen Charakter. Eine erhöhte Wasseraufnahme ist die Folge.

Der vorliegenden Erfindung lag daher die Aufgabe zugrunde, wässrige Pigmentpräparationen bereitzustellen, die eintrockenbeständig aber auch VOC-frei sind. Sie dürfen bei der Einfärbung die anwendungstechnischen Eigenschaften der Dispersionsfarben nicht verändern, so dass eine klebfreie Oberfläche entsteht, die zudem eine geringe Wasseraufnahme im Vergleich zum nichteingefärbten System hat.

Überraschenderweise wurde gefunden, dass bestimmte nachstehend definierte Polyalkylenglykole in Verbindung mit Polyglykolalkylethern die vorstehend genannte Aufgabe erfüllen, gegebenenfalls mit Fetten und/oder Ölen oder weiteren Zusatzstoffen.

Gegenstand der vorliegenden Erfindung sind wässrige Pigmentpräparationen, enthaltend
(A) mindestens ein organisches und/oder anorganisches Pigment,
(B) Dispergiermittel und/oder Tenside,
(C) einen alkoxylierten Alkohol der Formel (1), wie in Anspruch 1 definiert,
(D) einen Polyglykolalkylether,
(E) gegebenenfalls hydrotrope Oligomere und/oder Polymere,
(F) gegebenenfalls Fette, Öle oder Fettsäuren,
(G) gegebenenfalls weitere zur Herstellung wässriger Pigmentdispersionen übliche Zusatzstoffe, und
(H) Wasser.

Bevorzugte Pigmentpräparationen enthalten 5 bis 80 Gew.-%, beispielsweise 10 bis 70 Gew.-%, an Komponente (A).

Bevorzugte Pigmentpräparationen enthalten 0,1 bis 30 Gew.-%, beispielsweise 2 bis 15 Gew.-%, an Komponente (B).

Bevorzugte Pigmentpräparationen enthalten 0,1 bis 30 Gew.-%, beispielsweise 3 bis 15 Gew.-%, an Komponente (C).

Bevorzugte Pigmentpräparationen enthalten 0,1 bis 20 Gew.-%, beispielsweise 1 bis 10 Gew.-%, an Komponente (D).

Besonders bevorzugte Pigmentpräparationen enthalten an Komponente
(A) 5 bis 80 Gew.-%, beispielsweise 10 bis 70 Gew.-%,
(B) 0,1 bis 30 Gew.-%, beispielsweise 2 bis 15 Gew.-%,
(C) 0,1 bis 30 Gew.-%, beispielsweise 3 bis 15 Gew.-%,
(D) 0,1 bis 20 Gew.%, beispielsweise 1 bis 10 Gew.-%,
(E) 0 bis 20 Gew.-%, beispielsweise 0,1 bis 10 Gew.-%,
(F) 0 bis 10 Gew.-%, beispielsweise 0,1 bis 7 Gew.-%,
(G) 0 bis 30 Gew.%, beispielsweise 0,1 bis 5 Gew.-%, und
(H) Rest Wasser,
jeweils bezogen auf das Gesamtgewicht der Pigmentpräparation.

Im Falle dass eine oder mehrere der Komponenten (E), (F) und (G) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der Pigmentpräparation.

Die Komponente (A) der erfindungsgemäßen Pigmentpräparation ist ein feinteiliges organisches oder anorganisches Pigment oder ein Gemisch verschiedener organischer und/oder anorganischer Pigmente. Die Komponente (A) kann auch ein Farbstoff sein, der in bestimmten Lösungsmitteln unlöslich ist und in diesen Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-MetallkomplexPigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.
Von den genannten organischen Pigmenten sind diejenigen besonders geeignet, die für die Herstellung der Präparationen möglichst feinteilig sind, wobei bevorzugt 95 % und besonders bevorzugt 99 % der Pigmentpartikel eine Teilchengröße ≤ 500 nm besitzen. In Abhängigkeit vom verwendeten Pigment kann sich die Morphologie der Pigmentteilchen sehr stark unterscheiden, und dementsprechend kann auch das Viskositätsverhalten der Pigmentpräparationen in Abhängigkeit von der Teilchenform sehr unterschiedlich sein. Um ein ideales, newtonsches Viskositätsverhalten der Präparationen zu erhalten, sollten die Teilchen bevorzugt eine kugelförmige bis würfelförmige (mit abgeflachten Ecken) Gestalt besitzen.

Als beispielhafte Auswahl besonders bevorzugter organischer Pigmente sind dabei Rußpigmente, wie z.B. Gas- oder Fumaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen.

Das organische Pigment ist vorzugsweise mit Ruß und/oder Titandioxid kombiniert.

Ferner eignen sich verlackte Farbstoffe wie Ca-, Mg-, Al-Lacke von sulfonsäure- und/oder carbonsäuregruppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Anstelle von Pigmentdispersionen lassen sich auch Dispersionen herstellen, die als Feststoffe beispielsweise natürliche feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Als Komponente (B) der erfindungsgemäßen Pigmentpräparationen dienen übliche, zur Herstellung wässriger Pigmentdispersionen geeignete Dispergiermittel und Tenside oder Gemische solcher Substanzen. Üblicherweise werden anionische, kationische, amphotere oder nichtionische grenzflächenaktive Verbindungen hierfür verwendet. Besonders bewährt haben sich darunter Dispergiermittel, die eine oder mehrere mittel- oder langkettige Kohlenwasserstoffketten besitzen, zum Teil auch solche, die über aromatische Ringgruppen verfügen. Von der Vielzahl der Verbindungen soll an dieser Stelle nur eine Auswahl angeführt werden, ohne jedoch die Anwendbarkeit der erfindungsgemäßen Verbindungen auf diese Beispiele einzuschränken. Beispiele sind Alkylsulfate wie z.B. Laurylsulfat, Stearylsulfat oder Octadecylsulfat, primäre Alkylsulfonate wie z.B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso alle Salze dieser Verbindungen. Ferner eignet sich Sojalecithin oder es werden Kondensationsprodukte aus Fettsäure und Taurin oder Hydroxyethansulfonsäure verwendet, ebenso Alkoxylierungsprodukte von Alkylphenolen, Rizinusölkolophoniumestern, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosporsäureester, sowie deren Salze, den Sulfonaten, Sulfaten oder Phosphaten. Auch sind oxalkylierte Additionsverbindungen, die durch Umsetzung von Polyepoxiden mit Aminen oder Bisphenol-A bzw. Bisphenol-A-Derivaten mit Aminen erhalten werden, geeignet, in ähnlicher Weise auch Harnstoffderivate. Ebenso eignen sich Umsetzungsprodukte aus substituierten und unsubstituierten länger- und kürzerkettigen Alkylphenolen sowie deren polymeren Derivaten, z.B. Formaldehyd-Kondensationsprodukten, den Novolaken. Erwähnt seien auch nichtionische alkoxylierte Styrol-Phenol-Kondensate, die durch Anlagerung von gegebenenfalls substituierten Styrolen an gegebenenfalls substituierten Phenolen und Umsetzung mit Ethylenoxid und/oder Propylenoxid erhalten werden, ebenso deren ionisch modifizierten Derivate, beispielsweise als Sulfonsäure-, Schwefelsäure- und Phosphorsäureester, sowie deren Salze, den Sulfonaten, Sulfaten oder Phosphaten. Zudem eignen sich als grenzflächenaktive Verbindungen der Komponente (B) auch Ligninsulfonate und Polykondensate aus Naphthalinsulfonsäure und Formaldehyd bzw. auch aus Alkylarylsulfonsäuren, Halogenarylsulfonsäure, sulfonierten Phenolen oder sulfonierten Naphtholen mit Formaldehyd. Schließlich eignen sich auch polymere Dispergiermittel, beispielsweise wässrige, vorzugsweise 5 bis 40 gewichtsprozentige, Acrylatharzlösungen aus gelösten Polyacrylaten, die mit Hilfe von Basen durch Neutralisation der vinylischen Säurebausteine in Lösung gebracht wurden. Die hierzu verwendeten Polyacrylate stellen häufig Copolymere dar, die im Wesentlichen aus 30 bis 80 Mol-% Monoalkylenaromaten und 20 bis 70 Mol-% Acryl- und/oder Methacrylsäuren und/oder Estern der Acryl- und/oder Methacrylsäure bestehen. Die verwendeten Polyacrylate weisen zumeist zahlenmittlere Molmassen Mₙ zwischen 1000 und 100000 g/mol, vorzugsweise 2000 bis 50000 g/mol, auf.

Als Komponente (C) werden Verbindungen der Formel (1), 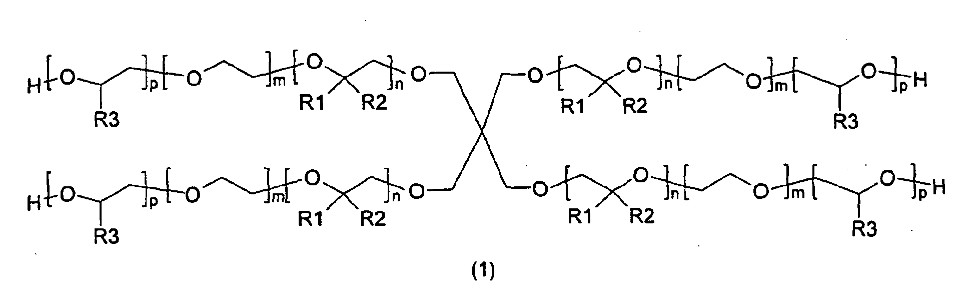 worin
- R¹, R², R³: unabhängig voneinander Wasserstoff, ein verzweigter oder unverzweigter C₁-C₂₀-Alkyl- oder C₃-C₂₀-Cycloalkylrest, ein verzweigter oder unverzweigter C₂-C₂₀-Alkenyl- oder C₃-C₂₀- Cycloalkenylrest, ein Benzylrest oder ein Phenylrest ist, bevorzugt H, CH₃ oder C₂H₅, und
- m: durchschnittlich eine Zahl von 0 bis 100, vorzugsweise von 1 bis 60, besonders bevorzugt 4 bis 25 ist,
- n: durchschnittlich eine Zahl von 0 bis 100, vorzugsweise von 0 bis 60, besonders bevorzugt 0 bis 10 ist,
- p: durchschnittlich eine Zahl von 0 bis 100, vorzugsweise von 0 bis 60, besonders bevorzugt 0 bis 10 ist,
wobei die Summe m+n+p mindestens 1, bevorzugt mindestens 4 und besonders bevorzugt 15 bis 30, beträgt, eingesetzt.

Die Verbindung der Formel (1) wird durch Alkoxylierung von Pentaerythrit mit der mindestens vierfach molaren Menge Alkoxyd hergestellt. Dabei entstehen naturgemäß Gemische mit verschieden langen Alkoxyd-Ketten, so dass für die Zahlen m, n und p nur Durchschnittswerte angegeben werden können.

Der Polyglykolalkylether, dem die Komponente (D) entspricht, ist bevorzugt eine Verbindung der Formel (2), 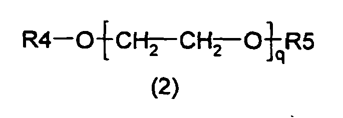 worin
- R⁴: ein substituierter oder unsubstituierter, unverzweigter oder bevorzugt verzweigter C₂-C₂₀-Alkyl- oder C₃-C₂₀-Cycloalkylrest oder ein substituierter oder unsubstituierter, verzweigter oder unverzweigter C₂-C₂₀-Alkenyl- oder C₃-C₂₀-Cycloalkenylrest ist, wobei die Substituenten 1, 2, 3 oder 4 Reste aus der Gruppe Halogen, Aryl, Aryl(C₁-C₂₀)alkyl, C₅-C₆-Cycloalkyl, Hetaryl, Hetaryl(C₁-C₂₀)alkyl oder C₁-C₂₀-Alkoxy sind,
- q: eine Zahl von 1 bis 200, bevorzugt 50 bis 120, ist,
- R⁵: H, XM oder ein substituierter oder unsubstituierter, unverzweigter oder bevorzugt verzweigter C₂-C₂₀-Alkyl- oder C₃-C₂₀-Cycloalkylrest oder ein substituierter oder unsubstituierter, verzweigter oder unverzweigter C₂-C₂₀-Alkenyl- oder C₃-C₂₀-Cycloalkenylrest ist, wobei die Substituenten 1, 2, 3 oder 4 Reste aus der Gruppe Halogen, Aryl, Aryl(C₁-C₂₀)alkyl, C₅-C₆-Cycloalkyl, Hetaryl, Hetaryl(C₁-C₂₀)alkyl oder C₁-C₂₀-Alkoxy sind, wobei
- X: SO₃⁻, SO₂⁻, CH₂COO⁻, PO₃²⁻ oder PO₃M⁻, und
- M: H, ein einwertiges Metallkation, ein zweiwertiges Metallkation, NH₄⁺, ein sekundäres, tertiäres oder quartäres Ammoniumion, oder eine Kombination davon, bedeuten.

Als Komponente (E) werden hydrotrope Retentionsmittel verwendet. Dafür eignen sich Verbindungen, die gegebenenfalls auch als Lösungsmittel dienen, oder oligomerer oder polymerer Natur sind, beispielsweise Formamid, Harnstoff, Tetramethylharnstoff, ε-Caprolactam, Ethylenglykol, Propylenglykol, Diethylenglykol, Triethylenglykol, Polyethylenglykol, α-Methyl-ω-hydroxypolyethylenglykolether, Dimethylpolyethylenglykolether, Dipropylenglykol, Polypropylenglykol, Dimethylpolypropylenglykolether, Copolymere aus Ethylen- und Propylenglykol, Butylglykol, Methylcellulose, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat, Cellulosederivate, Gelatinederivate, Polyvinylpyrrolidon, Polyvinylalkohol, Polyvinylimidazol und Co- und Terpolymere aus Vinylpyrrolidon, Vinylacetat und Vinylimidazol, wobei anschließend die Polymere mit Vinylacetatbausteinen einer Verseifung zum Vinylalkohol unterzogen werden können.

Der Komponente (F) entsprechen Fette und Öle pflanzlicher und tierischer Herkunft, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z.B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Als Komponente (G) werden beispielsweise kationische, anionische, amphotere oder nicht ionogene Verbindungen verwendet, die die Pigmentbenetzung fördern (Netzmittel). Auch kommen Verdicker, Konservierungsmittel, Viskositätsstabilisatoren, Mahlhilfsmittel und Füllstoffe zum Einsatz. Weitere übliche Zusatzstoffe können Antiabsetzmittel, Lichtschutzmittel, Antioxidantien, Entgaser/Entschäumer, schaumreduzierende Mittel sein, Antibackmittel sowie Additive, welche die Viskosität und Rheologie günstig beeinflussen. Als Mittel zur Regulierung der Viskosität kommen z.B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak.

Zur Herstellung der Pigmentpräparationen benutztes Wasser, Komponente (H), wird vorzugsweise in Form von entsalztem oder destilliertem Wasser eingesetzt. Auch Trinkwasser (Leitungswasser) und/oder Wasser natürlichen Ursprungs kann verwendet werden.

Gegenstand der vorliegenden Erfindung ist auch ein Verfahren zur Herstellung der erfindungsgemäßen Pigmentpräparationen, **dadurch gekennzeichnet, dass** man die Komponente (A) in Form von Pulver, Granulat oder wässrigem Presskuchen in Gegenwart von Wasser (H) sowie den Komponenten (B), (C) und (D) dispergiert, anschließend gegebenenfalls Wasser (H), sowie gegebenenfalls eine oder mehrere der Komponenten (E), (F) und (G) zumischt und gegebenenfalls die erhaltende wässrige Pigmentdispersion mit Wasser (H) auf die gewünschte Konzentration einstellt. Vorzugsweise werden die Komponenten (B), (C) und (D) und gegebenenfalls eine oder mehrere der Komponenten (E), (F) und (G) zunächst vermischt und homogenisiert, dann die Komponente (A) in die vorgelegte Mischung eingerührt, wobei das Pigment angeteigt und vordispergiert wird. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100°C erfolgen, zweckmäßig bei einer Temperatur zwischen 10 und 70°C, vorzugsweise bei 20 bis 60°C. Im Anschluss an die Feindispergierung kann die Pigmentpräparation mit Wasser (H), vorzugsweise entionisiertem oder destilliertem Wasser, weiter verdünnt werden.

Die erfindungsgemäßen Pigmentpräparationen eignen sich zum Pigmentieren und Färben von natürlichen und synthetischen Materialien aller Art, insbesondere von wässrigen Anstrichmitteln, Dispersions- und Lackfarben (Dispersionslacken). Ferner eignen sich die erfindungsgemäßen Pigmentpräparationen zur Einfärbung makromolekularer Materialien aller Art, z.B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und - ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten können Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z.B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Die erfindungsgemäßen Pigmentpräparationen sind außerdem geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonerbindemittel hierbei sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Ferner sind die erfindungsgemäßen Pigmentpräparationen geeignet als Farbmittel für Pulver und Pulverlacke, insbesondere für triboelektrisch oder elektrokinetisch versprühbare Pulverlacke, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Außerdem sind die erfindungsgemäßen Pigmentpräparationen als Farbmittel in Tinten, vorzugsweise Ink-Jet Tinten, wie z.B. auf wässriger oder nichtwässriger Basis ("Solvent Based"), Mikroemulsionstinten, UV-härtbare Tinten sowie in solchen Tinten, die nach dem Hot-Melt-Verfahren funktionieren, geeignet. Ink-Jet-Tinten enthalten im Allgemeinen insgesamt 0,5 bis 15 Gew.-%, vorzugsweise 1,5 bis 8 Gew.-%, (trocken gerechnet) der erfindungsgemäßen Pigmentpräparation. Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, der erfindungsgemäßen Pigmentpräparation, 5 bis 99 Gew.-% Wasser und 0,5 bis 94,5 Gew.-% organisches Lösungsmittel und/oder hydrotrope Verbindung. "Solvent Based" Ink-Jet-Tinten enthalten vorzugsweise 0,5 bis 15 Gew.-% der erfindungsgemäßen Pigmentpräparation, 85 bis 99,5 Gew.-% organisches Lösungsmittel und/oder hydrotrope Verbindungen. UV-härtbare Tinten enthalten im wesentlichen 0,5 bis 30 Gew.-% der erfindungsgemäßen Pigmentpräparation, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt-Ink-Jet-Tinten bestehen z.B. im Wesentlichen aus 20 bis 90 Gew.-% Wachs und 1 bis 10 Gew.-% der erfindungsgemäßen Pigmentpräparation. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Ges.-% Transparenzstabilisator (verhindert z.B. Kristallisation der Wachse) sowie 0 bis 2 Gew.-% Antioxidans enthalten sein.

Außerdem sind die erfindungsgemäßen Pigmentpräparationen auch geeignet als Farbmittel für Farbfilter ("Color Filter") für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper").

### Beispiele

### Beurteilung einer Pigmentpräparation:

Die Bestimmung der Farbstärke und des Farbtons erfolgte nach DIN 55986. Für den "Rub-Out-Test" wurde die Dispersionsfarbe oder der Lack nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger oder heller gefärbt ist als die angrenzende, nicht nachbehandelte Fläche (der "Rub-Out-Test" wird in DE-A-2 638 946 beschrieben). Die coloristischen Daten und die Verträglichkeiten mit den einzufärbenden Medien wurden anhand von bis zu acht verschiedenen handelsüblichen Weißdispersionen und bis zu zwei verschiedenen handelsüblichen Lacken ermittelt.

Die Beurteilung der Eintrockenbeständigkeit erfolgte, indem die Pigmentpräparation in eine Vertiefung einer Tüpfelplatte gefüllt wurde. Die Beurteilung der Dispersion erfolgte nach 1, 4, 8, 24 und 48 Stunden. Dabei wurde Hautbildung und das allgemeine Eintrocknen beurteilt.

Die Viskosität wurde mit einem Kegel-Platte-Viskosimeter (Roto Visco 1) der Firma Haake bei 20°C bestimmt (Titankegel: ∅ 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.

Für eine Beurteilung der Lagerstabilität der Dispersionen wurde die Viskosität direkt nach der Herstellung der Präparation gemessen, sowie nach vierwöchiger Lagerung bei 50°C und nach Lagerung in einer Klimakammer mit < 0°C.

### Herstellung einer Pigmentpräparation:

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z.B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z.B. mit AE3-M1 von VMA-Getzmann) oder einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beispiel 1

| | |
|---|---|
| 48 Teile | Komponente (A), C.I. Pigment Gelb 74 |
| 4 Teile | Komponente (B), ionisch modifiziertes Tristyrylphenyloxyethylat |
| 5 Teile | Komponente (C), Verbindung der Formel (1) mit n = 0, m = 16, p = 4, R³ = CH₃, |
| 5 Teile | Komponente (D), R⁴ = Isotridecyl, q = 100, R⁵ = H |
| 1 Teil | Komponente (F), pflanzliches Öl |
| 4 Teile | Komponente (G), Rheologieadditive |
| 0,9 Teile | Komponente (G), Konservierungsmittel |
| Rest | Komponente (H), Wasser |

Die Pigmentpräparation hat eine hohe Farbstärke und ist besonders flockungsstabil. In sechs verschiedenen handelsüblichen Weißdispersionen lässt sie sich unter leichter Verteilbarkeit sehr gut einarbeiten. Der Rub-Out-Test zeigt in allen Fällen keine Farbstärkeunterschiede im Vergleich zwischen der nachgeriebenen Fläche zur nicht nachbehandelten Fläche. Somit ist die Präparation zu den getesteten Dispersionen sehr gut verträglich. Die Pigmentpräparation besitzt ausgezeichnete rheologische Eigenschaften, erweist sich als gut fließfähig und lagerstabil. Die Viskosität nach der Herstellung beträgt 0,58 Pa·s. Weiterhin verfügt die Präparation über eine gute

Eintrockenbeständigkeit, da sie erst nach 24 Stunden einzutrocknen beginnt.

### Beispiel 2

| | |
|---|---|
| 70 Teile | Komponente (A), C.I. Pigment Rot 101 |
| 3 Teile | Komponente (B), ionisch modifiziertes Tristyrylphenyloxyethylat |
| 5 Teile | Komponente (C), Verbindung der Formel (1) mit R³ = CH₃, n = 0, m = 16, p = 4 |
| 5 Teile | Komponente (D), R⁴ = Isotridecyl, q = 100, R⁵ = H |
| 2 Teile | Komponente (G), Rheologieadditive |
| 0,9 Teile | Komponente (G), Konservierungsmittel |
| Rest | Komponente (H), Wasser |

Die Pigmentpräparation hat eine der Standarddispersion entsprechende Koloristik und ist besonders flockungsstabil. In sechs verschiedenen Weißdispersionen lässt sie sich unter leichter Verteilbarkeit sehr gut einarbeiten. Der Rub-Out-Test zeigt in allen Fällen keine Farbstärkeunterschiede im Vergleich zwischen der nachgeriebenen Fläche zur nicht nachbehandelten Fläche. Somit ist die Präparation zu den getesteten Dispersionen sehr gut verträglich. Die Pigmentpräparation besitzt, für anorganische Pigmentpasten ausgezeichnete rheologische Eigenschaften und erweist sich als gut fließfähig und lagerstabil. Die Viskosität nach der Herstellung beträgt 2,3 Pa·s. Weiterhin verfügt die Präparation über eine gute Eintrockenbeständigkeit, da sie erst nach 24 Stunden einzutrocknen beginnt.

### Vergleichsbeispiel 2a

| | |
|---|---|
| 70 Teile | Komponente (A), C.I. Pigment Rot 101 |
| 3 Teile | Komponente (B), ionisch modifiziertes Tristyrylphenyloxyethylat |
| 10 Teile | Komponente (E), Triethylenglykol |
| 2 Teile | Komponente (G), Rheologieadditive |
| 0,9 Teile | Komponente (G), Konservierungsmittel |
| Rest | Komponente (H), Wasser. |

### Beispiel 3

| | |
|---|---|
| 70 Teile | Komponente (A), C.I. Pigment Braun 24 |
| 3 Teile | Komponente (B), ionisch modifiziertes Tristyrylphenyloxyethylat |
| 3 Teile | Komponente (B), Fettsäureoxyethylat, ionisch modifiziert |
| 5 Teile | Komponente (C), Verbindung der Formel (1) mit R¹ = H, R² = CH₃, n = 20, m = 5, p = 0 |
| 10 Teile | Komponente (D), R⁴ = lsotridecyl, q = 100, R⁵ = H |
| 1 Teil | Komponente (G), Rheologieadditiv |
| 0,9 Teile | Komponente (G), Konservierungsmittel |
| Rest | Komponente (H), Wasser |

Die Pigmentpräparation hat eine der Standarddispersion entsprechende Koloristik und ist besonders flockungsstabil. In sechs verschiedenen Weißdispersionen lässt sie sich unter leichter Verteilbarkeit sehr gut einarbeiten. Der Rub-Out-Test zeigt in allen Fällen keine Farbstärkeunterschiede im Vergleich zwischen der nachgeriebenen Fläche zur nicht nachbehandelten Fläche. Somit ist die Präparation zu den getesteten Dispersionen sehr gut verträglich. Die Pigmentpräparation besitzt für anorganische Pigmentpasten ausgezeichnete rheologische Eigenschaften und erweist sich als gut fließfähig und lagerstabil. Die Viskosität nach der Herstellung beträgt 1,9 Pa·s. Weiterhin verfügt die Präparation über eine gute Eintrockenbeständigkeit, da sie erst nach 24 Stunden einzutrocknen beginnt.

### Beispiel 4

| | |
|---|---|
| 62 Teile | Komponente (A), C.I. Pigment Blue 28 |
| 4 Teile | Komponente (B), Tristyrylphenyloxyethylat |
| 5 Teile | Komponente (C), Verbindung der Formel (1) mit R³ = CH₃, n = 0, m = 16, p = 4 |
| 5 Teile | Komponente (D), R⁴ = Isotridecyl, q = 100, R⁵ = H |
| 2,5 Teile | Komponente (E), Polyvinylpyrrolidon |
| 1 Teil | Komponente (G) Rheologieadditiv |
| 0,9 Teile | Komponente (G), Konservierungsmittel |
| Rest | Komponente (H), Wasser |

Die Pigmentpräparation hat eine dem Standard entsprechende Koloristik. In sechs verschiedenen Weißdispersionen lässt sie sich unter leichter Verteilbarkeit sehr gut einarbeiten. Der Rub-Out-Test zeigt in allen Fällen keine Farbstärkeunterschiede im Vergleich zwischen der nachgeriebenen Fläche zur nicht nachbehandelten Fläche, so dass keine Flockungserscheinungen nachgewiesen werden können. Somit ist die Präparation zu den getesteten Dispersionen universalverträglich. Die Pigmentpräparation besitzt ausgezeichnete rheologische Eigenschaften, erweist sich als gut fließfähig und ist lagerstabil. Die Viskosität nach der Herstellung beträgt 2,0 Pa·s. Weiterhin verfügt die Präparation über eine gute Eintrockenbeständigkeit, da sie nach 24 Stunden einzutrocknen beginnt.

### Beispiel 5

| | |
|---|---|
| 70 Teile | Komponente (A), C.I. Pigment Braun 24 |
| 3 Teile | Komponente (B), ionisch modifiziertes Tristyrylphenyloxyethylat |
| 3 Teile | Komponente (B), Fettsäureoxyethylat, ionisch modifiziert |
| 5 Teile | Komponente (C), Verbindung der Formel (1) mit R¹ = H, R² = CH₃, n = 20, m = 5, p = 0 |
| 5 Teile | Komponente (D), R⁴ = Isotridecyl, q = 100, R⁵ = H |
| 2,5 Teile | Komponente (E), Polyvinylpyrrolidon |
| 1 Teil | Komponente (G) Rheologieadditiv |
| 0,9 Teile | Komponente (G), Konservierungsmittel |
| Rest | Komponente (H), Wasser |

Die Pigmentpräparation hat eine der Standarddispersion entsprechende Koloristik und ist besonders flockungsstabil. In sechs verschiedenen Weißdispersionen lässt sie sich unter leichter Verteilbarkeit sehr gut einarbeiten. Der Rub-Out-Test zeigt in allen Fällen keine Farbstärkeunterschiede im Vergleich zwischen der nachgeriebenen Fläche zur nicht nachbehandelten Fläche. Somit ist die Präparation zu den getesteten Dispersionen sehr gut verträglich. Die Pigmentpräparation besitzt für anorganische Pigmentpasten ausgezeichnete rheologische Eigenschaften und erweist sich als gut fließfähig und lagerstabil. Die Viskosität nach der Herstellung beträgt 1,9 Pa·s. Weiterhin verfügt die Präparation über eine gute Eintrockenbeständigkeit, da sie erst nach 24 Stunden einzutrocknen beginnt.

## Patentansprüche

1. Wässrige Pigmentpräparation, enthaltend
(A) mindestens ein organisches und/oder anorganisches Pigment,
(B) Dispergiermittel und/oder Tenside,
(C) einen alkoxylierten Alkohol der Formel (1) ist, 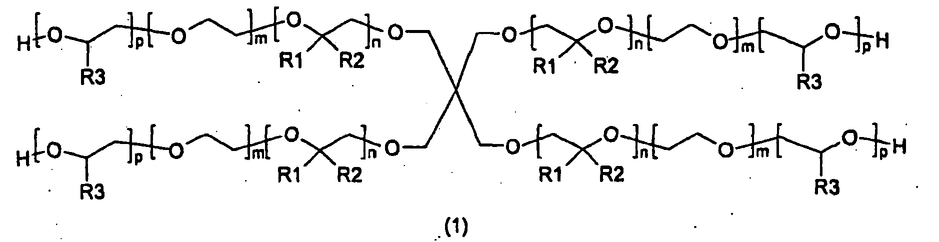 worin
R¹, R², R³ unabhängig voneinander Wasserstoff, C₁-C₂₀-Alkyl, C₃-C₂₀- Cycloalkyl, C₂-C₂₀-Alkenyl, C₃-C₂₀-Cyctoalkenyl, Phenyl oder Benzyl ist,
m durchschnittlich eine Zahl von 0 bis 100
n durchschnittlich eine Zahl von 0 bis 100
p durchschnittlich eine Zahl von 0 bis 100 ist,
wobei die Summe m+n+p mindestens 1 beträgt.
(D) einen Polyglykolalkylether,
(E) gegebenenfalls hydrotrope Oligomere und/oder Polymere,
(F) gegebenenfalls Fette, Öle oder Fettsäuren,
(G) gegebenenfalls weitere zur Herstellung wässriger Pigmentdispersionen übliche Zusatzstoffe, und
(H) Wasser.

2. Pigmentpräparation nach Anspruch 1, **dadurch gekennzeichnet, dass** das organische Pigment von Komponente (A) ein Monoazo-, Disazo-, verlacktes Azo-, β-Naphthol-, Naphthol AS-, Benzimidazolon-, Disazokondensations-, Azo-Metallkomplex-Pigment oder ein polycyclisches Pigment aus der Gruppe der Phthalocyanin-, Chinacridon-, Perylen-, Perinon-, Thioindigo-, Anthanthron-, Anthrachinon-, Flavanthron-, Indanthron-, lsoviolanthron-, Pyranthron-, Dioxazin-, Chinophthalon-, Isoindolinon-, lsoindolin- und Diketopyrrolopyrrol-Pigmente oder Ruße ist.

3. Pigmentpräparation nach einem oder mehreren der Ansprüche 1 bis 2, **dadurch gekennzeichnet, dass** Komponente (D) eine Verbindung der Formel (2) ist, 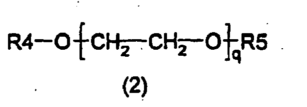 worin
R⁴ ein substituierter oder unsubstituierter, unverzweigter oder bevorzugt verzweigter C₂-C₂₀-Alkyl- oder C₃-C₂₀-Cycloalkylrest oder ein substituierter oder unsubstituierter, verzweigter oder unverzweigter C₂-C₂₀-Alkenyl- oder C₃-C₂₀-Cycloalkenylrest ist, wobei die Substituenten 1, 2, 3 oder 4 Reste aus der Gruppe Halogen, Aryl, Aryl(C₁-C₂₀)alkyl, C₅-C₆-Cycloalkyl, Hetaryl, Hetaryl(C₁-C₂₀)alkyl oder C₁-C₂₀-Alkoxy sind,
q eine Zahl von 1 bis 200, bevorzugt 50 bis 120, ist,
R⁵ H, XM oder ein substituierter oder unsubstituierter, unverzweigter oder bevorzugt verzweigter C₂-C₂₀-Alkyl- oder C₃-C₂₀-Cycloalkylrest oder ein substituierter oder unsubstituierter, verzweigter oder unverzweigter C₂-C₂₀-Alkenyl- oder C₃-C₂₀-Cycloalkenylrest ist, wobei die Substituenten 1, 2, 3 oder 4 Reste aus der Gruppe Halogen, Aryl, Aryl(C₁-C₂₀)alkyl, C₅-C₆-Cycloalkyl, Hetaryl, Hetaryl(C₁-C₂₀)alkyl oder C₁-C₂₀-Alkoxy sind, wobei
X SO₃⁻, SO₂⁻, CH₂COO⁻, PO₃²⁻ oder PO₃M⁻, und
M H, ein einwertiges Metallkation, ein zweiwertiges Metallkation, NH₄⁺, ein sekundäres, tertiäres oder quartäres Ammoniumion, oder eine Kombination davon, bedeuten.

4. Pigmentpräparation nach einem oder mehreren der Ansprüche 1 bis 3, enthaltend 5 bis 80 Gew.-% an Komponente (A).

5. Pigmentpräparation nach einem oder mehreren der Ansprüche 1 bis 4, enthaltend 0,1 bis 30 Gew.-% an Komponente (C).

6. Pigmentpräparation nach einem oder mehreren der Ansprüche 1 bis 5, enthaltend an Komponente
(A) 5 bis 80 Gew.-%,
(B) 0,1 bis 30 Gew.-%,
(C) 0,1 bis 30 Gew.-%,
(D) 0,1 bis 20 Gew.-%,
(E) 0 bis 20 Gew.-%,
(F) 0 bis 10 Gew.-%,
(G) 0 bis 30 Gew.-%,
(H) Rest Wasser,
jeweils bezogen auf das Gesamtgewicht der Pigmentpräparation.

7. Verfahren zur Herstellung einer Pigmentpräparation nach mindestens einem der Ansprüche 1 bis 6, **dadurch gekennzeichnet, dass** man die Komponente (A) in Form von Pulver, Granulat oder wässrigem Presskuchen in Gegenwart von Wasser (H) sowie den Komponenten (B), (C) und (D) dispergiert, anschließend gegebenenfalls Wasser (H), sowie gegebenenfalls eine oder mehrere der Komponenten (E), (F) und (G) zumischt und gegebenenfalls die erhaltende wässrige Pigmentdispersion mit Wasser (H) versetzt.

8. Verwendung einer Pigmentpräparation nach einem oder mehreren der Ansprüche 1 bis 6 zum Pigmentieren natürlicher oder synthetischer Materialien.

9. Verwendung nach Anspruch 8 zum Pigmentieren von wässrigen Anstrichmitteln, Dispersions- und Lackfarben, wasserverdünnbaren Lacken, Tapetenfarben und Druckfarben.

10. Verwendung nach Anspruch 8 zum Pigmentieren von natürlichen und synthetischen Fasermaterialien, Cellulosefasern, zur Papiermassefärbung und Laminateinfärbung sowie zur Herstellung von Drucktinten, Ink-Jet-Tinten, elektrophotographischen Tonem, Pulverlacken, Farbfiltern, elektronischen Tinten und "Electronic Paper", Color Filter, Holzschutzsystemen, Viskose-Spinnfärbung, Wurstdärmen, Saatgut, Düngemitteln, Glasflaschen, sowie zur Massefärbung von Dachziegeln, zur Einfärbung für Putze, Beton, Holzbeizen, Buntstiftminen, Faserschreibem, Wachsen, Paraffinen, Tuschen, Pasten für Kugelschreiber, Kreiden, Wasch- und Reinigungsmitteln, Schuhpflegemitteln, Latex-Produkten, Schleifmitteln sowie zum Einfärben von Kunststoffen.

## Claims

1. An aqueous pigment preparation comprising
(A) at least one organic and/or inorganic pigment,
(B) dispersants and/or surfactants,
(C) an alkoxylated alcohol of the formula (1) 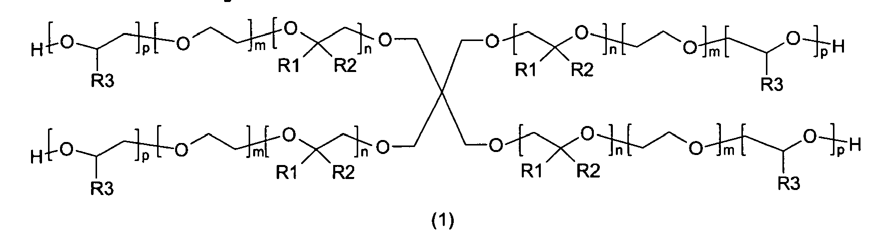 in which
R¹, R², R³ each independently is hydrogen, C₁-C₂₀-alkyl, C₃-C₂₀-cycloalkyl, C₂-C₂₀-alkenyl, C₃-C₂₀-cycloalkenyl, phenyl or benzyl,
m is on average a number from 0 to 100
n is on average a number from 0 to 100
p is on average a number from 0 to 100,
the sum m+n+p being at least 1
(D) a polyglycol alkyl ether,
(E) if desired, hydrotropic oligomers and/or polymers,
(F) if desired, fats, oils or fatty acids,
(G) if desired, further additives conventional for producing aqueous pigment dispersions, and
(H) water.

2. The pigment preparation as claimed in claim 1, **characterized in that** the organic pigment of component (A) is a monoazo, disazo, laked azo, β-naphthol, naphthol AS, benzimidazolone, disazo condensation, azo metal complex pigment or a polycyclic pigment from the group of phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline, and diketopyrrolopyrrole pigments or carbon blacks.

3. The pigment preparation as claimed in one or more of claims 1 to 2, **characterized in that** component (D) is a compound of the formula (2) 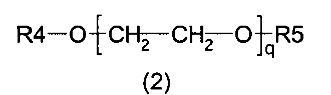 in which
R⁴ is a substituted or unsubstituted, unbranched or, preferably, branched C₂-C₂₀-alkyl or C₃- C₂₀-cycloalkyl radical or a substituted or unsubstituted, branched or unbranched C₂-C₂₀- alkenyl or C₃-C₂₀-cycloalkenyl radical, the substituents being 1, 2, 3 or 4 radicals from the group consisting of halogen, aryl, aryl (C₁-C₂₀) alkyl, C₅-C₆-cycloalkyl, hetaryl, hetaryl (C₁-C₂₀)alkyl or C₁-C₂₀-alkoxy,
q is a number from 1 to 200, preferably 50 to 120,
R⁵ is H, XM or a substituted or unsubstituted, unbranched or, preferably, branched C₂-C₂₀- alkyl or C₃-C₂₀-cycloalkyl radical or a substituted or unsubstituted, branched or unbranched C₂-C₂₀-alkenyl or C₃-C₂₀- cycloalkenyl radical, the substituents being 1, 2, 3 or 4 radicals from the group consisting of halogen, aryl, aryl(C₁- C₂₀)alkyl, C₅-C₆-cycloalkyl, hetaryl, hetaryl(C₁-C₂₀)alkyl or C₁-C₂₀-alkoxy, where
X is SO₃⁻, SO₂⁻, CH₂COO⁻, PO₃²⁻ or PO₃M⁻, and
M is H, a monovalent metal cation, a divalent metal cation, NH₄⁺, a secondary, tertiary or quaternary ammonium ion, or a combination thereof.

4. The pigment preparation as claimed in one or more of claims 1 to 3, containing 5% to 80% by weight of component (A).

5. The pigment preparation as claimed in one or more of claims 1 to 4, containing 0.1% to 30% by weight of component (C).

6. The pigment preparation as claimed in one or more of claims 1 to 5, containing the following weight percentages of each component:
(A) 5% to 80% by weight,
(B) 0.1% to 30% by weight,
(C) 0.1% to 30% by weight,
(D) 0.1% to 20% by weight,
(E) 0% to 20% by weight,
(F) 0% to 10% by weight,
(G) 0% to 30% by weight,
(H) as the remainder, water,
based in each case on the total weight of the pigment preparation.

7. A process for producing a pigment preparation as claimed in at least one of claims 1 to 6, **characterized in that** component (A) is dispersed in the form of powder, granules or aqueous presscake in the presence of water (H) and of components (B), (C), and (D), subsequently, if desired, water (H), and, if desired, one or more of components (E), (F), and (G) are admixed, and, if desired, water (H) is added to the resultant aqueous pigment dispersion.

8. The use of a pigment preparation as claimed in one or more of claims 1 to 6 for pigmenting natural or synthetic materials.

9. The use as claimed in claim 8 for pigmenting aqueous coating materials, emulsion paints, and colored coatings, water-thinnable paints, wallpaper inks and printing inks.

10. The use as claimed in claim 8 for pigmenting natural and synthetic fiber materials, cellulose fibers, for the mass dyeing of paper and for coloring laminate, and also for producing printing inks, ink-jet inks, electrophotographic toners, powder coating materials, color filters, electronic inks and electronic paper, color filter, wood preservation systems, the spin coloring of viscose, sausage skins, seed, fertilizers, glass bottles, and also for the mass coloring of roof shingles, for coloring for renders, concrete, wood stains, colored pencil leads, fibertip pens, waxes, paraffins, graphics inks, ballpoint pen pastes, chalks, detergents and cleaning products, shoe polishes, latex products, abrasives, and for coloring plastics.

## Revendications

1. Préparation aqueuse pigmentaire, contenant
(A) au moins un pigment organique et/ou inorganique,
(B) des dispersants et/ou des agents tensioactifs,
(C) un alcool alcoxylé, de formule (1) , 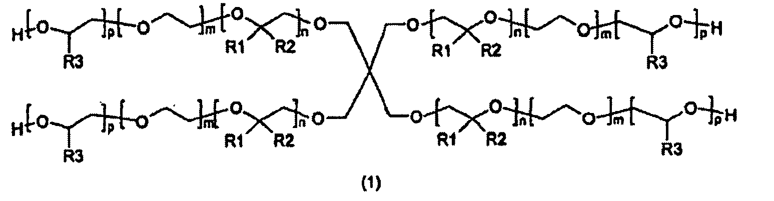 où
R¹, R², R³ représentent, indépendamment l'un de l'autre hydrogène, C₁-C₂₀-alkyle, C₃-C₂₀- cycloalkyle, C₂-C₂₀-alcényle, C₃-C₂₀- cycloalcényle, phényle ou benzyle,
m vaut en moyenne un nombre de 0 à 100
n vaut en moyenne un nombre de 0 à 100
p vaut en moyenne un nombre de 0 à 100,
la somme de m + n + p valant au moins 1,
(D) un polyglycolalkyléther,
(E) des oligomères et/ou des polymères le cas échéant hydrotropes,
(F) le cas échéant des graisses, des huiles ou des acides gras,
(G) le cas échéant d'autres additifs usuels pour la préparation de dispersions aqueuses pigmentaires, et
(H) de l'eau.

2. Préparation pigmentaire selon la revendication 1, **caractérisée en ce que** le pigment organique du composé (A) est un pigment de type monoazo, diazo, azo laqué, β-naphtol, naphtol AS, benzimidazolone, de condensation diazo, azo-complexe métallique ou un pigment polycyclique du groupe formé par les pigments de type phtalocyanine, quinacridone, pérylène, périnone, thio-indigo, anthanthrone, anthraquinone, flavanthrone, indanthrone, isoviolanthrone, pyranthrone, dioxazine, quinaphtalone, iso-indolinone, iso-indoline et dicétopyrrolopyrrole ou des suies.

3. Préparation pigmentaire selon l'une ou plusieurs des revendications 1 à 2, **caractérisée en ce que** le composant (D) est un composé de formule (2)
R4-O-[-CH₂-CH₂-O-]_{q}-R5 (2)
où
R⁴ représente un radical C₂-C₂₀-alkyle ou C₃-C₂₀- cycloalkyle substitué ou non substitué, non ramifié ou de préférence ramifié ou un radical C₂- C₂₀-alcényle ou C₃-C₂₀-cycloalcényle substitué ou non substitué, ramifié ou non ramifié, où les substituants sont 1, 2, 3 ou 4 radicaux du groupe formé par halogène, aryle, aryl(C₁-C₂₀)alkyle, C₅- C₆-cycloalkyle, hétaryle, hétaryl(C₁-C₂₀)alkyle ou C₁-C₂₀-alcoxy,
q vaut un nombre de 1 à 200, de préférence de 50 à 120,
R⁵ représente H, XM ou un radical C₂-C₂₀-alkyle ou C₃- C₂₀-cycloalkyle substitué ou non substitué, non ramifié ou de préférence ramifié ou un radical C₂- C₂₀-alcényle ou C₃-C₂₀-cycloalcényle substitué ou non substitué, ramifié ou non ramifié, où les substituants sont 1, 2, 3 ou 4 radicaux du groupe formé par halogène, aryle, aryl(C₁-C₂)alkyle, C₅- C₆-cycloalkyle, hétaryle, hétaryl(C₁-C₂₀)alkyle ou C₁-C₂₀-alcoxy, où
X représente SO₃⁻, SO₂⁻, CH₂COO⁻, PO₃²⁻ ou PO₃M⁻, et
M représente H, un cation métallique monovalent, un cation métallique divalent, NH₄⁺, un ion d'ammonium secondaire, tertiaire ou quaternaire ou une combinaison de ceux-ci.

4. Préparation pigmentaire selon l'une ou plusieurs des revendications 1 à 3, contenant 5 à 80% en poids de composant (A).

5. Préparation pigmentaire selon l'une ou plusieurs des revendications 1 à 4, contenant 0,1 à 30% en poids de composant (C).

6. Préparation pigmentaire selon l'une ou plusieurs des revendications 1 à 5, contenant en composant
(A) 5 à 80% en poids,
(B) 0,1 à 30% en poids,
(C) 0,1 à 30% en poids,
(D) 0,1 à 20% en poids,
(E) 0 à 20% en poids,
(F) 0 à 10% en poids,
(G) 0 à 30% en poids,
(H) pour le reste de l'eau
à chaque fois par rapport au poids total de la préparation pigmentaire.

7. Procédé pour la confection d'une préparation pigmentaire selon au moins l'une quelconque des revendications 1 à 6, **caractérisé en ce qu'**on disperse le composant (A) sous forme de poudre, de granulat ou de gâteau de filtre aqueux en présence d'eau (H) ainsi que des composants (B), (C) et (D), on mélange ensuite le cas échéant de l'eau (H), ainsi que le cas échéant un ou plusieurs des composants (E), (F) et (G) et on additionne le cas échéant la dispersion aqueuse pigmentaire obtenue d'eau (H).

8. Utilisation d'une préparation pigmentaire selon l'une ou plusieurs des revendications 1 à 6 pour la pigmentation de matériaux naturels ou synthétiques.

9. Utilisation selon la revendication 8 pour la pigmentation d'enduits aqueux, de peintures dispersées et de peintures laques, de laques diluables à l'eau, d'encres pour tapis et d'encres d'imprimerie.

10. Utilisation selon la revendication 8 pour la pigmentation de matériaux fibreux naturels et synthétiques, de fibres de cellulose, pour la coloration de pâte à papier et pour la coloration de laminés ainsi que pour la préparation d'encres d'imprimerie, d'encres pour imprimantes à jet d'encre, de toners électrophotographiques, de laques en poudre, de filtres colorés, d'encres électroniques et de "papier électronique", de filtres couleur, de systèmes de protection du bois, pour la coloration de fibres de viscose, de boyaux de saucisses, de semences, d'engrais, de bouteilles en verre, ainsi que pour la coloration dans la masse de tuiles, pour la coloration de crépis, de béton, de teintures pour bois, de mines de crayons de couleur, de feutres, de cires, de paraffines, d'encres de chine, de pâtes pour stylos à bille, de craies, d'agents de lavage et de nettoyage, de produits d'entretien de chaussures, de produits de type latex, d'agents abrasifs ainsi que pour la coloration de matériaux synthétiques.
